# EUROPÄISCHE PATENTANMELDUNG

(11) **EP 2 672 129 A2**
(43) Veröffentlichungstag der Anmeldung: **11.12.2013**
(21) Anmeldenummer: 13170899.2
(22) Anmeldetag: 06.06.2013
(51) Int. Cl.: F16B 13/14

(54) **Anker für Wände, zum Befestigen von abragenden Bauwerken wie Markisen**

(30) Priorität: 06.06.2012 DE 102012104938
(71) Anmelder: Moissl, Johann, 84178 Kröning (DE)
(72) Erfinder: Moissl, Johann, 84178 Kröning (DE)
(74) Vertreter: Farago, Peter Andreas

(57) **Zusammenfassung**

Es wird ein Anker für Wände zum Befestigen von abragenden Bauwerken, mit einem in eine Öffnung in einem Mauerwerk einsetzbaren Ankerkörper (1) beschrieben, in dem ein Gewindestab (14) zentrisch eingesetzt ist. Am Außenmantel des Ankerkörpers ist ein Nuten-Profil (3, 5, 6) vorgesehen zur Aufnahme eines Verbundmörtels, mit dem der Anker im Mauerwerk festgesetzt wird. Zudem ist mindestens ein axialer Verfüll-Kanal (9, 10) vorgesehen, zum Einbringen unter Druck des Verbundmörtels nach Einsetzen des Ankers in das Mauerwerk, Schließlich ist eine elastische Gewebehülle (37) vorhanden, die in der Zone der Nuten (3) über den Außenumfang des Ankerkörpers gezogen ist.

## Beschreibung

Die Erfindung bezieht sich auf einen Anker für Wände gemäß Oberbegriff des Anspruchs 1, wie er zum Befestigen an Wänden verschiedener abragender Bauwerke wie Markisen, Balkone, Wintergärten oder Vordächer, Verwendung findet.

Es ist bislang sehr problematisch, eine geeignete Verankerung für solcherart Bauwerke in ein Mauerwerk anzubringen, insbesondere wenn dieses eine Dämmung besitzt. Um eine stabile und sichere Verankerung zu gewährleisten ist es meist notwendig, die bestehende Dämmschicht zu entfernen und eine Konsole zu setzten. Die Dämmschicht und der Putz müssen danach ausgebessert werden, was meist sehr aufwändig ist.

Eine vielfach verwendete weitere Methode besteht darin, mit Verbundanker zu arbeiten, siehe auch in den DE 101 45 122 A1, EP 1 293 685 B1, DE 198 07 678 A1 und DE 200 22 639 U1. Diese weisen jedoch den Nachteil auf, dass das Mauerwerk beim Bohren beschädigt wird und dadurch die Qualität der Verankerung eingeschränkt ist. Zudem ist beim Einbringen des Verbundmörtels dessen sichere Verteilung nicht gewährleistet, da der Anker in das bereits mit Mörtel verfüllte Bohrloch eingeführt wird. Verbundanker halten aber bekanntlich durch Stoffschluß im Bohrloch. Auch wird die Befestigung umso labiler, je stärker die äußere Dämmungsschicht der Wand ist.

Die EP 0 810 378 A1 und EP 0 833 065 A1 beschreiben lediglich Kunststoff-Verbunddübel mit üblichen Außenprofilierungen am Schaft und darüber gezogenem Gewebestrumpf, die eine zentrische axiale Innenöffnung für die Aufnahme von Befestigungsschrauben sowie radiale Austrittsöffnungen für den zentrisch eingespritzen Mörtel besitzen. Der Mörtel wird vor Einsetzen der Schrauben eingespritzt, so daß die Schrauben im Dübel fest verkleben und nach Aushärten nicht mehr ausgeschraubt werden können. Die Tragfähigkeit dieser Dübel ist gering, zumal in der Zone des Außensteges des Hohlkammerziegels kein Verkleben des Dübels in der Bohrung erfolgt, sondern ein Freiraum vorhanden ist, der ein Ausbrechen begünstigt. Die DE 37 01 959 A1 und DE 102 02 821 A1 beschreiben Ankerhülsen zum Verankern einer Ankerstange über den radial durchlässigen Schaftteil, bestehend aus einem Siebgitter oder einem Käfig mit Axialstegen, über die ein elastischer Gewebestrumpf (Hülle) gezogen ist. Nach Einsetzen des Ankerkörpers in die Wandöffnung wird der Verbundmörtel in die zentrische Öffnung gespritzt, tritt radial aus und bläht die Hülle auf. Dann wird der Gewindebolzen eingesetzt, wodurch der Mörtel radial nach außen verdrängt wird und die Hülle noch weiter aufbläht, einen Pfropfen in einer Hohlkammer des Hohlkammersteines bildend. Der Gewindestab ist nach dem Aushärten unbewegbar festgeklebt, der Dübel im Außensteg jedoch nicht, da dort kein Mörtel eindringen kann. Entsprechend gering ist die Tragkraft dieser Dübel oder Anker, dies aber auch durch ihre relativ filigrane Ausführungsform.

Die DE 23 15 859 A1 zeigt einen Verankerungsbolzen, der einen im eingesetzten Zustand aus der Mauer hervorragenden Gewindekopf besitzt, während am Schaft ein elastischer Textilstrumpf aufgezogen ist. Zudem sind eine zentrische Einspritzbohrung vorhanden und nahe dem Einführende radiale Öffnungen, die in den Raum zwischen Außenmantelfläche und Textilstrumpf öffnen. Abgesehen davon, daß es sich hier um eine Leicht-Ausführung eines Ankers handelt, die nicht zur Befestigung schwerer Bauwerke verwendbar ist, erfüllt er keine der Konditionen des erfindungsgemäßen Dübels, wie ausreichende Tragfähigkeit, Isolation, nachträgliches Einspritzen des Mörtels usw.

In der AT 350 242 wird ebenfalls eine Art Kunststoff-Verankerungsdübel mit aufgezogener Gewebehülle beschrieben. Zwar wird hier der Mörtel exzentrisch so eingespritzt, daß er direkt in den Zwischenraum zwischen Außenmantel und Textilstrumpf gelangt und diesen im Hohlraum des Hohlkammerziegels zu einem Pfropfen aufbläht. Die Befestigungsschraube wird nach Entfernen des Mundstücks für die Spritzvorrichtung eingesetzt, ist somit nicht festgeklebt. Aber auch der relativ große Dübelkopf ist nicht in der Mauerbohrung festgeklebt, wodurch die Haltekraft des Dübels zusätzlich reduziert und insgesamt nicht zur Befestigung großer Bauwerke wie Markisen geeignet ist.

Zudem beschreibt die DE 44 229 055 A1 einen Anker für Beton, bestehend aus einem Ankerkörper mit mantelseitiger Gewindenut und innerer Gewindebohrung, in der eine Gewindestange eingesetzt ist. Der Kleber wird vor Einsetzen des Ankers in das Bohrloch eingeführt und durch diesen in Einführgegenrichtung gedrückt, so daß der Zwischenraum zwischen Bohrloch und Ankerkörper zumindest teilweise gefüllt wird. Bei Vorhandensein von Hohlräumen im Mauerstein, ist dieser Anker nicht gut verwendbar, da der Kleber in den Hohlräumen wegfließt, statt den Anker festzusetzen. Zudem ist der Ankerkörper relativ kurz, füllt die Bohrung nicht bis zur Stirnseite der Mauer aus, so daß die Gewindestange, eventuell nur teilweise umgeben von Mörtel, die Tragkräfte übernehmen muß, was unzureichend ist.

Schließlich ist aus der DE 10 2006 017 459 A1 ein Abstandshalter für die Befestigung eines Gegenstandes an einem eine Dämmschicht aufweisenden Untergrund bekannt, bei dem ein zylindrisch-bolzenförmiger Ankerkörper in eine durch die Dämmschicht in den Untergrund ragende Sackloch-Bohrung so eingeführt ist, dass er stirnseitig mit der Außenfläche der Dämmschicht bündig abschließt. Die Stirnseite dient als Anschlag für den zu befestigenden Gegenstand. Der Ankerkörper besteht dabei aus faserverstärktem Kunststoff und weist auf seiner Außenmantelfläche eine gewindeartige schmale Wulst-Ausbuchtung auf. Er besitzt an seiner nach außen weisenden Endseite eine in einer koaxialen Bohrung eingeschraubte oder eingeklebte Gewindestange, die über die Außenseite der Dämmschicht hinaus absteht. An seinem inneren Ende ist der Ankerkörper im Sackloch des Untergrundes mittels einer vor dessen Einschieben in das Sackloch eingebrachten Mörtelmasse aber nur unzulänglich gesichert. Stärker abragende Bauwerke wie Balkone können damit aber nicht ausreichend sicher befestigt werden, da insbesondere die Verankerung im Mauerwerk nicht ausreichend sicher hält.

**Aufgabe** der Erfindung ist es daher, einen Anker o. g. Gattung anzugeben, der eine sichere, stabile, schnelle und saubere Befestigung erlaubt, mit erhöhten Aufnahmekräften, auch für schwere Bauwerke wie Markisen oder Balkone, bei einfachem und leicht zu handhabendem Aufbau und Einbringen ins Mauerwerk.

Diese Aufgabe wird durch einen Anker mit den Merkmalen des Anspruchs 1 gelöst. Weitere vorteilhafte Ausgestaltungen sind in den Unteransprüchen gekennzeichnet.

Dem gemäß ist im Ankerkörper mindestens ein axialer Verfüll-Kanal am (Außenkanal) oder nahe zum (Innenkanal) Außenmantel vorgesehen, zum Einbringen unter Druck des Verbundmörtels nach Einsetzen des Ankers in das Mauerwerk, wobei der Kanal oder die Kanäle von der vorderen (im Einsatz äußeren) Stirnseite des Ankerkörpers bis zur letzten Profilerhebung des Außenprofils geführt ist, also von außen offen zugänglich ist. Hierdurch wird erreicht, dass der Verbundmörtel genau an der Stelle platziert oder platzierbar ist, an der er für einen sicheren Halt benötigt wird, sogar bei bereits eingesetzter Anker-Gewindestange, ohne diese aber unlösbar zu verkleben.

Zudem sind als Außenprofil am Ankerkörper mehrere axial zueinander beabstandete ringförmige Nuten (3) vorgesehen, die mit den Verfüll-Kanälen in Verbindung stehen oder sich in diese radial öffnen.

Schließlich ist der Ankerkörper auf seinem Außenumfang, zumindest in Länge seiner Eindringtiefe im Mauerwerk, mit einer schlauchförmigen, dehnbaren oder ausweitbaren, feinen und reißfesten, dabei für z. B. Verbundmörtel nur sehr geringfügig durchlässigen, engmaschigen Gewebehülle oder -netz versehen.

Es ist von Vorteil, wenn dass das Gewebenetz aus einem Kunststofffaser-Strickmaterial gefertigt ist, ähnlich wie dasjenige von Damen-Feinstrümpfen (sogenannten Nylon- oder Perlonstrümpfen oder -strumpfhosen). Dabei besitzt das Gewebenetz eine Schlauch-Hülsenform und ist mit insbesondere radialer Vorspannung auf dem Ankerkörper aufgezogen, damit der Verbundmörtel erst die axialen Verfüllkanäle und die Ringnuten verfüllt. Hierdurch wird Mörtel gespart und es findet gleichzeitig eine gleichmäßige Verteilung statt, mit homogenem Formschluß.

Im mit einem Gewebenetz versehenen, also mit aufgeschobenem Gewebenetz oder "angezogenen" Zustand sind die beiden Enden des Gewebenetzes mittels Kleber ringförmig am Ankerkörper befestigt. Die Oberfläche des Ankerkörpers ist dabei im Bereich der Verklebung gerillt, wodurch das Netz, auch durch dessen Vorspannung, noch sicherer hält. Zusätzlich wird es noch mit einem selbstklebenden Gewebeband o. ä. gesichert, insgesamt eine ringförmige Befestigungszone bildend. Das Gewebeband am Einsteckende überragt dabei den Körper frontal, leicht einwärts gezogen, wodurch das Gewebenetz beim Einbringen in den Hohlstein geschützt ist.

Beim Verfüllen unter Druck mit Verbundmörtel, wird dieser Verbundmörtel zuerst die Kanäle und Ringnuten füllen und dann versuchen, in die Mauerwerköffnungen einzudringen, wobei er am Gewebenetz einen radialen Druck ausübt und dieses entsprechend seiner Elastizität in die Öffnungen oder Kanäle des Mauerwerks zumindest geringfügig hinein drückt. Dadurch werden in die Mauerwerköffnungen wulstförmig radial eingreifende Erhebungen gebildet, die einen Formschluß zwischen Ankerkörper und Mauerwerk darstellen, aber auch einen kraftaufnehmenden Druck in Höhe der Stege der Hohlsteine ausübt.. Gleichzeitig wird verhindert, dass viel Verbundmörtel in die Mauerwerköffnungen eindringt, ohne zur Auszieh-Festigkeit des Ankers beizutragen. Hierdurch wird relativ viel Verbundmörtel eingespart, bei gleichzeitig sehr wesentlich erhöhtem Scher- und Ausziehwiderstand.

Eine optimal sichere Befestigung der zu verankernden Bauwerke wird damit erreicht.

Es ist von Vorteil, wenn der mindestens eine Verfüll-Kanal eine zur Außenfläche offene Nut und somit ein Außenkanal ist, vorzugsweise mit rechteckigem Querschnitt. Er kann aber auch eine axiale Bohrung oder Öffnung sein, die zwischen der zentrischen Öffnung und Außenmantel des Ankerkörpers verläuft, dabei radial nach außen in die Ringnuten reicht, ohne jedoch radial nach innen mit der zentrischen Öffnung in Verbindung zu stehen, einen Innenkanal darstellend. Diese Ausführungsform ist besonders vorteilhaft bei in Strangguß-Verfahren gefertigten Ankerkörpern, wobei dann an der Einsteckseite ein Verschlußstopfen vorzusehen ist.

Bei Vorhandensein von zwei Verfüllkanälen, sind diese zueinander diagonal gegenüberliegend am Außenmantel anzuordnen, um eine gleichmäßige Verfüllung zu erreichen.

Der Innen-Verfüll-Kanal sollte einen Durchschnittsdurchmesser von 5 - 12 mm, vorzugsweise von 8 mm besitzt und eine in Umfangsrichtung sich erstreckende ovale Form haben, um damit nicht radial nach innen in Kontakt mit der zentrischen Innenöffnung zu kommen und gleichzeitig um radial nach außen über eine größere Fläche mit den Ringnuten in offenen Kontakt zu stehen, für eine leichtere Verfüllung..

Von Vorteil ist auch, wenn die ringförmigen Nuten des Außenprofils des Ankerkörpers in Form von mindestens einer Zone mit mehreren ringförmigen Nuten oder mit Gewindegängen vorhanden ist. Dabei können vorzugsweise zwei Nutenzonen vorhanden sein, wobei eine erste, hintere Zone nahe dem hinteren Ende, also dem inneren Einführende angeordnet ist, während eine zweite, vordere Zone nahe dem vorderen Ende des Ankerkörpers vorgesehen ist. Ist der Anker in einen Untergrund einzubringen, bei dem am Mauerwerk eine Dämmschicht vorhanden ist, dann ist der Anker bzw. der Ankerkörper so auszulegen, daß die vordere Nutenzone entsprechend dem Sackloch im Mauerwerk angeordnet ist. Die äußerste Nut der zweiten Nutenzone sollte in eingesetztem Zustand des Ankers innerhalb des Mauerwerks liegen, z. B. min. 5 mm weiter innen als dessen Stirnfläche.

Da die Zonen der höchsten Zug- und Druckbelastung des Ankers am Mauerwerk hinten oben und unten vorne sich befinden, ist zudem von Vorteil, wenn zu den beiden Nutenzonen je ein eigener Verfüll-Kanal für den Verbundmörtel führt, wobei dann am effektivsten der Mörtel einbringbar ist, wenn die hintere Zone mit einem oben im Ankerkörper axial eingebrachten Kanal verbunden ist, während zur vorderen Zone ein unterer Kanal führt, also ein diagonal zum oberen Kanal entgegengesetzt angeordneter Kanal. Dabei sind die Kanäle so ausgebildet, dass jeweils ein Verfüllschlauch in diese bis zur jeweils ersten Nut der Zonen einführbar ist, wodurch das Verfüllmaterial auch sicher jeweils nur in den entsprechenden Bereich der Zonen eingebracht wird. Hierdurch ist sicher gestellt, dass der Mörtel genau in die Zonen mit der höchsten Beanspruchung geleitet wird, so dass er in diesen Zonen oder Bereichen auch unter maximalem Eindringdruck in die Nuten und die in diese Zone sich öffnenden Zwischenräume der Mauerziegeln eindringt, soweit das elastische Gewebenetz dies zulässt.

Von Vorteil ist des Weiteren, dass im Ankerkörper eine zentrische Durchgangsbohrung vorhanden ist, durch welche die Gewindestange hindurchgeführt ist. Diese ist vorzugsweise aus thermisch weniger leitfähigem Stahl gefertigt und ist am hinteren inneren Einführende des Ankerkörpers in einer Gewindebohrung oder in einer in der Durchgangsbohrung fest eingebrachten, vorzugsweise eingeklebten oder eingepressten Mutter schraubgeführt gehalten. Sie ragt andererseits an der vorderen Stirnseite des Ankers als Befestigungszapfen hervor und durchsetzt somit den gesamten Ankerkörper. Dadurch wird die Tragfähigkeit des Ankers noch weiter erhöht.

Ein weiterer großer Vorteil ist zudem darin zu sehen, dass der Anker innen- bzw. rückseitig durch die Gewindestange verlängerbar ist, d. h. es ist bedarfsweise eine längere Gewindestange einsetzbar, die dann am hinteren Ende des Ankerkörpers entsprechend weit abragt. Dies ist besonders dann von Wichtigkeit oder Vorteil, wenn beim Schneiden der Öffnung zum Einsetzten des Ankers auf Beton gestoßen wird, z. B. an die Betondecke und zu befürchten ist, dass der Anker dann nicht einen ausreichend sicheren Halt im Mauerwerk findet. Es wird dann eine entsprechende koaxiale Bohrung im Beton vorgesehen, in welche der abragende Gewindestabteil hineinreicht und über vorhergehend eingebrachten Verbundmörtel festgehalten wird. Ist dann die Gewindespindel des Ankers gleich entsprechend lang ausgelegt, so dass sie durch die hinterendige Gewindebohrung hindurch geführt entsprechend weit nach hinten aus dem Ankerkörper hervorragt, dann dient sie sowohl zur Befestigung des Bauwerkes (vorderes Ende), als auch zur Erhöhung der Ausziehfestigkeit des Ankers (hinteres Ende). Diese kann noch zusätzlich erhöht werden, wenn das nach innen abragende Ende der Gewindespindel mit einer Mutter ersehen ist.

Es kann aber auch sehr vorteilhaft sein, wenn die zentrische Bohrung im Ankerkörper eine Gewindebohrung ist, die als Sacklochbohrung eingebracht ist oder als ein in einer Durchgangsbohrung in entsprechender Länge eingeschnittenes Gewinde.

Erfindungsgemäß kann der Ankerkörper aus Metall oder Kunststoff gefertigt sein. Von besonderem Vorteil hat sich erwiesen, wenn der Ankerkörper aus faserverstärktem Material gefertigt ist, das in entsprechender Materialmischung auswählbar ist, so dass es eine hohe Belastbarkeit sicherstellt. So kann als Basismaterial Kunststoff oder Beton verwendet werden, während als verstärkende Fasern z. B. solche aus Kohle, Kunststoff, Glas oder Stahl verwendbar sind.

Vorzugsweise wird zur Herstellung des Ankerkörpers glasfaserverstärkter Kunststoff (GFK) verwendet. Solcherart Material wird z. B. von der Fa. Schöck Bauteile GmbH u. a. in der DE 10 2005 041 082 A1 beschrieben, wobei dort das faserverstärkte Material für Bewehrungsstäbe für Hohlwände verwendet wird.

Die Verwendung von solcherart glasfaserverstärktem Kunststoff für die Ankerkörper hat, abgesehen von der einfachen Herstellbarkeit des Ankerkörpers, auch den Vorteil, dass gleichzeitig eine thermische Isolierung zwischen Mauerwerk und befestigtem Bauwerk vorhanden ist.

Der Ankerkörper und damit der gesamte Anker kann mit einem wesentlich größeren Durchmesser realisiert werden, als dies derzeit üblich ist, wobei eine Verdoppelung und mehr möglich ist. So ist derzeit ein Durchmesser von höchstens 16 mm üblich, während beim erfindungsgemäßen Anker Durchmesser von über 30 mm bis 70 mm und mehr verwendbar sind. Hierdurch wird die aufzunehmende Last auf eine größere Fläche verteilt.

Erfindungsgemäß kann der Ankerkörper aus Metall, vorzugsweise aus thermisch weniger leitfähigem Stahl gefertigt sein, wobei dann der Metall-Ankerkörper und die Gewindestange in ihrem gesamten Verlauf thermisch nach außen zu trennen, also zu isolieren sind. Hierfür ist an der vorderen Stirnseite des Metall-Ankerkörperteiles ein koaxialer vorderer Isolierkörper vorhanden, einen Gesamt-Körper bildend, während zwischen dem Körper und der Gewindespindel weitere Dämmungen in Form eines Isolierrohres und axial zwischen hinterer Befestigungsmutter des Gewindestabes und Stufung der Erweiterungsbohrung eine Isolierscheibe vorhanden ist, z. B. aus thermisch isolierendem Kunststoff.

Dabei besteht der vordere Isolierkörper vorzugsweise aus Glasfasern oder einem Verbundmaterial mit Glasfasern, besitzt den gleichen Außendurchmesser wie der Metall-Ankerkörperteil und kann in der Länge der Stärke der äußeren Isolierschicht der Mauer angepasst werden, indem sie fallweise entsprechend ausgelegt oder vor Ort abgeschnitten wird. Letzteres ist von großem Vorteil, da die Stärke der Isolierschichten sehr unterschiedlich ist. Somit kann die Ankerlänge auch vor Ort auf der Baustelle problemlos angepasst werden.

Für den Fall, dass nur geringere Lasten zu übernehmen sind, z. B. bei kleineren Vordächern, Postkästen usw., kann insbesondere der Ankerkörper auch aus Kunststoff oder anderem Material gefertigt sein, d.h. aus einem entsprechend belastungsfähigen Material oder Kunststoff. Sollte dieses Material eine ausreichend gute Dämmung darstellen, dann ist eine zusätzliche Dämmung der Metallteile, also der Gewindespindel und deren Befestigungsmutter zum Ankerkörper nicht notwendig bzw. diese entfallen.

Besonders kostengünstig und auch qualitativ wirkt sich aus, wenn der Ankerkörper im Straggußverfahren gefertigt ist, aus glasfaserverstärktem Kunststoff (GFK) oder aus Aluminium, wobei dann gleich mit der mindestens eine Innen-Verfüll-Kanal (19) und die zentrische Öffnung vorhanden sind, und wobei die Innenkanäle mit Stopfen an der Einsteckseite verschlossen sind und die zentrische Öffnung zumindest an der nach außen weisenden Seite in vorbestimmter Länge mit einem Gewinde für die Anker-Gewindestange versehen ist. Auch sind nachträglich das Außenprofil einzubringen und der Gewebehülle darüber zu befestigen.

Für nicht isolierte und nur verputzte oder zu verputzende Wände ist von Vorteil, wenn der Ankerkörper so ausgelegt und die Maueröffnung so eingebracht ist, daß er in eingestecktem Zustand ca. 15 mm übersteht, also um ca. die Länge der Netz-Befestigungszone und gleichzeitig der Putzstärke. Dadurch befindet sich die erste Verteiler-Ringnut in Höhe des ersten und in der Regel stärksten Steges des Hohlsteines, wodurch diese Zone mit Mörtel beaufschlagt wird. Durch die Belastungsaufnahme im vorderen Bereich werden die Auszugskräfte und die Durchbiegung sehr stark verbessert. Hier kann von einem Anker-Grundkörper und einer kurzen Version gesprochen werden.

Für isolierte, mit einer Dämmschicht versehene Wände ist der Ankerkörper ebenfalls mit einem Anker-Grundkörper mit Nuten und darüber gezogener Gewebehülle, versehen, er erstreckt sich aber über diesen hinaus als Verlängerungsteil mit glatter Mantelfläche, wobei dann der Ankerkörper in eingesetztem Zustand insgesamt maximal bis zur Außenfläche der Dämmschicht reicht. Ist dann aber eine dickere Dämmschicht vorhanden oder der Verlängerungsteil ist zu kurz, so daß die Stirnfläche des Ankerkörpers nicht bündig mit der Wand- oder Dämmschicht- Außenfläche abschließt, dann besteht die vorteilhafte Möglichkeit, Anker-Beilegscheiben einzufügen, um die Ankerlänge auszugleichen. Diese bestehen aus dem gleichen Material wie der Ankerkörper, besitzen den gleichem Außendurchmesser, zentrisch eine Durchgangsbohrung für den Ankerbolzen und keine Verfüll-Kanäle. Hierdurch ist der Anker flexibel und muß nicht zugeschnitten werden. Handhabungs- und Fehlerquellen durch Wegfall des Zuschneidens minimiert und die Arbeitszeit optimiert.

Erfindungsgemäß kann beim Einbringen des Ankers ins Mauerwerk so verfahren werden, dass zuerst das Mauerwerk und die eventuell vorhandene Dämmung mit einem handelsüblichen Kernbohrer entsprechend dem Außendurchmesser des Ankerkörpers ausgebohrt wird, wobei wegen dem darauf aufgezogenen Gewebenetz, selbstverständlich eine entsprechend geringfügig größere Bohrung auszuführen ist. Da nur geschnitten wird, bleibt das Mauerwerk in seiner Substanz erhalten, was für einen guten und sicheren Halt wichtig ist. Anschließend wird das Kernloch von Mauerresten und Staub befreit, z. B mit Hilfe von Pressluft oder einem Staubsauger. Dann wird der Anker in die Öffnung so eingesetzt, dass die Stirnseiten von Anker und Dämmung fluchten und diese Position des Ankers wird eventuell mit einem Keil gesichert.

Im Fall, daß der Ankerkörper mit Nutenzonen und zu diesen führenden Außen-Verfüllkanälen ausgestattet ist, wird über einen Schlauch, der im jeweiligen Kanal verlegt ist bzw. in diesen bis zur ersten Nut der entsprechenden Nutenzone eingeführt wird, das Verbundmaterial mit Hilfe einer herkömmlichen Presse eingebracht. Falls der Ankerkörper mit axial gleichmäßig beabstandeten Nuten und mit Innen-Verfüllkanälen versehen ist, wird kein Schlauch eingeführt, sondern es wird direkt mit einer Presse bzw. über deren Einspritztülle der Mörtel in den Innenkanal eingedrückt. Eine vorhergehende Erwärmung des Ankers und des Verbundmörtels ermöglicht auch das Befestigen bei kalter Witterung. Die Nuten erlauben ein optimales Verteilen des Verbundmaterials in den entsprechenden Zonen oder gleichmäßig über die gesamte Länge des Mauerwerkloches und den anliegenden Mauer- bzw. Ziegelhohlräume. Dabei dringt der Verbundmörtel auch unter das relativ eng am Ankerkörper anliegende elastische Gewebenetz und drückt es, entsprechend dem Profil gefüllt mit Verbundmörtel in die Mauerwerköffnungen hinein, so weit dessen Elastizität und Vorspannung dies zulässt. Es bilden sich dadurch ringförmige Wülste, entsprechend den Ringkanälen des Ankerkörpers und der Mauerwerköffnungen. Diese reichen in die Mauerwerkkanäle soweit hinein, dass ein sicherer Formschluß vorhanden ist. Hierdurch wird ein Herausziehen des Ankers aus dem Mauerwerk praktisch unmöglich.

Nach Abbinden des Klebers kann bereits mit der Montage des Bauwerks, z. B. einer Markise begonnen werden.

Falls das Mauerwerk relativ dünn ist, z. B. nur die Dicke einer Ziegel- oder Mauersteinbreite besitzt und daher z. B. beim Bohren durch das Mauerwerk bis zum Beton oder Betondecke vorgedrungen wird, somit die Dicke des Mauerwerks etwa der Länge des Ankers entspricht, besteht erfindungsgemäß die Möglichkeit, in den Beton eine koaxiale Bohrung einzubringen, für eine verlängerte Ankerschraube. Nach Reinigen des Beton-Bohrloches und dessen zumindest teilweises Verfüllen mit Verbundmörtel, wird ein Anker mit einer Ankerschraube eingesetzt, die entsprechend lang ist bzw. weit in die Betonbohrung hineinreicht, wodurch die Beanspruchungsfestigkeit des Ankers entsprechend erhöht wird. Diese kann noch weiter erhöht werden, wenn auf das abragende Ende der Gewindestange eine entsprechende Mutter aufgebracht wird.

Die Ausführungsform des Ankerkörpers mit Gewebenetz hat somit große Vorteile, wie:
- Der Formschluß mit dem Bauwerk ist gewährleistet.
- Mörtel wird gespart, da Hohlkammern im Bauwerk nicht unnötig voll gefüllt werden.
- Die Lage des Ankers ist beim Einbringen flexibel, somit ist ein falscher Einbau nicht möglich.
- Die optimale Verteilung des Mörtels ist sichergestellt.
- Der Anker kann in alle Richtungen belastet werden.
- Die Sicherheit der Verankerung erhöht sich wesentlich.

Nachfolgend wird die Erfindung anhand von Ausführungsbeispielen unter Bezug auf die Zeichnung näher erläutert.

Es zeigen:
- Fig. 1:: einen Axialschnitt durch einen erfindungsgemäßen Anker in erster Ausführung, ohne Gewebenetz,
- Fig. 2:: eine Draufsicht auf den Anker aus Fig. 1,
- Fig. 3:: eine Seitenansicht des Ankers aus Fig. 1, in im Untergrund eingesetzten und mit Verbundmörtel verfüllten Zustand, ohne Gewebenetz,
- Fig. 4:: eine teilweise Schnittansicht ähnlich wie in Fig. 3, jedoch durch eine zweite Ausführungsform, mit langer Gewindestange,
- Fig. 5:: eine Radialansicht des Ankers in Ausführung mit aufgezogenem Gewebenetz,
- Fig. 6:: eine Seitenansicht des Ankers aus Fig. 5, in eingesetztem und verfülltem Zustand,
- Fig. 7:: eine Perspektivansicht eines Ankerkörpers gefertigt im Straggußverfahren,
- Fig. 8:: eine Ansicht eines Ankerkörpers in kurzer Ausführung mit gleichmäßigen Nuten, noch ohne Netz,
- Fig. 9:: eine Stirnansicht des Ankers aus Fig. 8,
- Fig. 10:: eine Ansicht des Ankerkörpers aus Fig. 8, mit aufgezogener Gewebehülle,
- Fig. 11:: den Ankerkörper aus Fig. 10, in einem Hohlstein eingesetzt und verfüllt,
- Fig. 12 bis 14:: Ansichten eines Ankerkörpers mit zwei Innen-Verfüllkanälen und einer zentrischen Sackloch-Gewindebohrung,
- Fig. 15 bis 17:: Perspektiv- und Schnittansichten eines in einen Hohlstein ohne äußere Dämmung eingesetzten kurzen Ankerkörpers,
- Fig. 18 bis 21:: Ansichten eines langen Ankerkörpers, mit einem Innen-Verfüllkanal und zentrischer Sackloch-Gewindebohrung,
- Fig. 22 bis 24 :: Perspektiv- und Schnittansichten eines in einen Hohlstein mit äußerer Dämmung eingesetzten langen Ankerkörpers, und
- Fig. 25 bis 27:: geschnittene Explosions-Seiten- und Perspektivansichten eines Ankers mit einem langen Ankerkörper in kürzerer Form und mit Beilegscheiben, in eingebauter und in uneingebauter Darstellung.

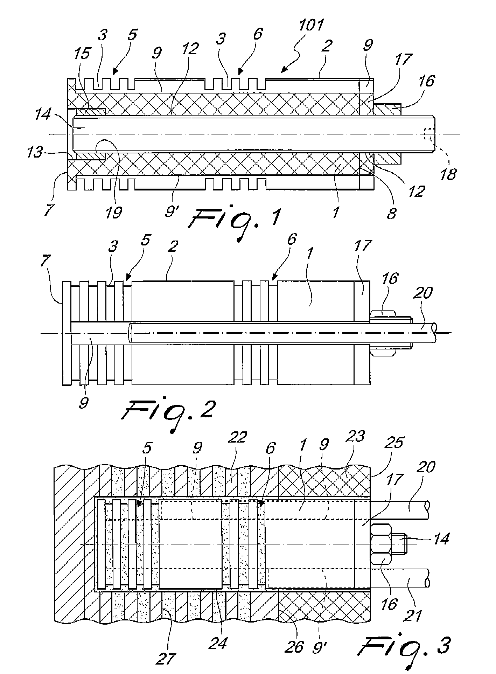

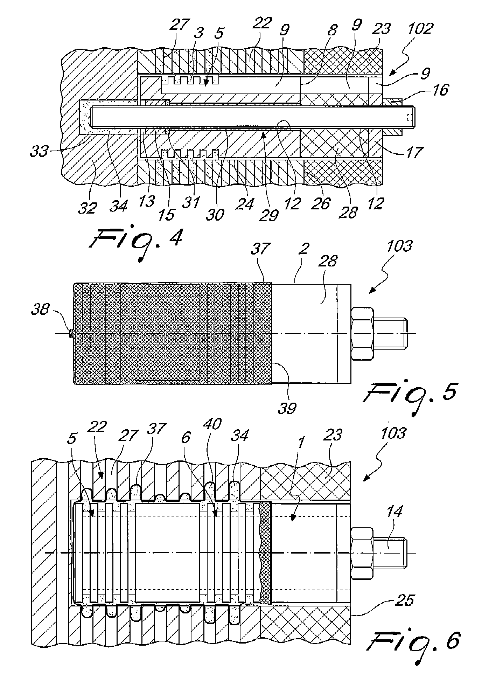

In **Fig. 1 bis 3** ist ein Anker in erster Ausführung 101 (ohne Gewebenetz wie Fig. 5) dargestellt, bei dem der Ankerkörper 1 aus thermisch isolierendem Kunststoff besteht, vorzugsweise aus faserverstärktem Kunststoff besteht.

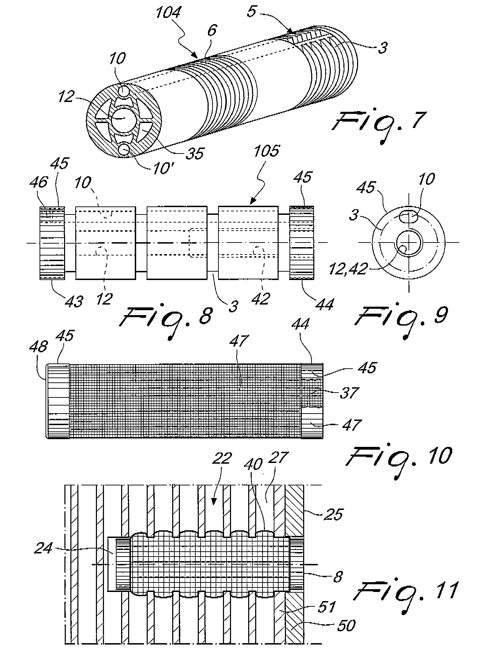

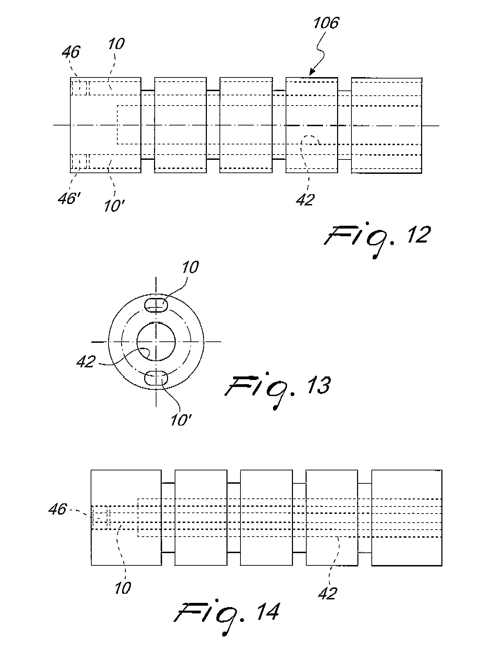

Wie insbesondere aus **Fig. 1** zu erkennen ist, besteht der erfindungsgemäße Anker in erster Ausführung 101 im wesentlichen aus einem zylindrischen Ankerkörper 1, in dessen Außenmantel 2 mehrere Umfangsnuten 3 vorgesehen oder eingearbeitet sind. Dabei sind die Nuten 3 zu mehreren in zwei zueinander axial beabstandeten Zonen 5 und 6 angeordnet. Dabei ist eine erste Zone 5 nahe dem hinteren Einsteckende 7 des Ankerkörpers vorgesehen, während die zweite Zone 6 sich in Richtung äußeres Ende oder vordere Stirnfläche 8 axial versetzt befindet, je nach vorgesehener Einstecktiefe, wie im Zusammenhang mit Fig. 3 noch näher beschrieben wird. Einer jeden Nutenzone 5 und 6 ist ein nutenförmiger axialer äußerer Verfüll-Kanal 9 und 9' zugeordnet, der vom vorderen Ende 8 bis zur in Richtung hinten oder in Einsteckrichtung jeweils letzten Nut der Nutenzone führt. Dabei sind die beiden Kanäle 9, 9' am Umfang um 180° zueinander versetzt, liegen somit einander diagonal gegenüber (siehe auch in Fig. 7 und Fig. 13).

Der Ankerkörper besitzt eine zentrische Durchgangsöffnung 12, die zum hinteren Ende 7 hin eine Erweiterungsöffnung 13 besitzt. In der Öffnung 12 befindet sich eine Anker-Gewindestange 14, die einerseits bis an das äußere Ende 7 heranreicht und mit diesem Ende in einer Führungsmutter 15 axial verstellbar gehalten ist. Dabei ist die Mutter 15 in der Erweiterungsöffnung 13 fest eingeklebt oder eingepresst.

Am aus dem vorderen Ende des Ankers hervorragenden Ende der Anker-Gewindestange 14 befindet sich eine Befestigungsmutter 16 für die anzubringenden Gegenstände, wobei zwischen äußerem Ende 8 und Schraube 16 eine Scheibe 17 vorgesehen ist. Diese Scheibe 17 ist aus Metall gefertigt, besitzt gleiche Außenabmessungen wie der Ankerkörper 1, somit Gleichheit in Außenumfang, innerer Durchgangsöffnung 12, diagonal gegenüberliegender Kanäle 9 und 9'.

In der vorderen Stirnseite des Gewindestabes 14 ist eine Vertiefung als Werkzeugeingriff 18 vorgesehen, z. B. ein Schlitz oder ein Innensechskant. Diese dient zum Verstellen des Gewindestabes im Sinne einer axialen Verschiebung in der Mutter 15, zum Einstellen der vorne abragenden Gewinde- also Befestigungslänge. Es ist zu erkennen, dass die Gewindespindel 14 bedarfsweise auch leicht austauschbar ist, z. B. gegen eine kürzere oder längere Gewindespindel, je nach Art des vorne zu befestigenden Gegenstandes oder eines hinten aus dem Ankerkörper abstehenden Teiles der Gewindestange, zur Vergrößerung der gesamten Ankerlänge (siehe auch Fig. 4).

Aus **Fig. 2** ist zu erkennen, wie die erste Nutenzone 5 angeordnet ist und wie der Kanal 9 bis zur letzten Nut 3 der Zone 5 geführt ist. Hier ist ein Verfüll-Schlauch 20 im Kanal 9 eingesetzt, der bis zur ersten Nut der Zone 5 reicht. Über diesen Schlauch 20 wird der Verbundmörtel unter Druck in die Nuten-Zone 5 eingebracht und verfüllt diese und die angrenzenden Mauerwerk-Öffnungen (siehe Fig. 3).

In **Fig. 3** ist der Anker aus Fig. 1 und 2 in im Mauerwerk eingesetzten Zustand dargestellt, wobei hier das Gewebenetz fehlt und wobei hier vorne am Mauerwerk eine Dämmschicht 23 vorgesehen ist. In Mauerwerk 22 und Dämmschicht 23 ist eine Sackloch-Bohrung 24 eingebracht, in welche der Anker so eingesetzt ist, dass er vorne bündig mit der Frontfläche 25 der Dämmschicht 23 abschließt. Zudem ist der Anker so eingeschoben, dass der eine Verfüllkanal 9 vertikal oben ist, während der zweite Verfüllkanal 9' sich vertikal darunter befindet. Es ist zu erkennen, wie in den jeweils bis zur letzten Nut 3 der ersten/inneren Nutenzone führenden Verfüll-Kanälen 9, 9' bis zur jeweilig ersten Nut 3 der Nutenzonen 5, 6 reichend, die Verfüll-Schläuche 20, 21 eingesetzt sind. Der unter Druck eingefüllte Verbundmörtel ist insbesondere jeweils im Bereich der Zonen 5 und 6 verteilt und zwar in den Nuten 3, dem Zwischenraum zwischen Ankerkörper und Mauerwerk-Sacklochöffnung 24, sowie in den hier vertikalen Mauerwerk-Hohlräumen 27. Die Verfüllung mit Verbundmörtel ist hinten oben und vorne unten etwas verstärkter vorhanden, da dort die Verfüllschläuche enden, also genau dort, wo die höchste Zug- und Druckbeanspruchung des Mauerwerks über den Anker erfolgt. Versuche haben gezeigt, dass erfindungsgemäß eine optimale, gezielte Verfüllung der entsprechenden Zone erfolgen kann. Nicht dargestellt ist, dass im Falle eines ungedämmten Mauerwerks 22 der Ankerkörper 1 kürzer ausgeführt wird und zwar gekürzt bis nahe der zweiten Nutenzone 6, so dass der Anker stirnseitig mit der Stirn- oder Außenfläche 26 des Mauerwerks 22 abschließt.

Bei dem in **Fig. 4** dargestellten Ausführungsbeispiel handelt es sich um einen Anker, der vom Aufbau her im Wesentlichen gleich oder zumindest sehr ähnlich demjenigen aus Fig. 1 - 3 ausgeführt ist. Auch dieser Anker besitzt einen Ankerkörper 1, mit zwei Nutenzonen 5, 6 und zwei diagonal gegenüberliegenden Kanälen 9, 9' und mit einer zentrischen Durchgangsöffnung 12, in deren Erweiterungsöffnung 13 eine Mutter 15 eingepreßt ist, in der wiederum eine Gewindestange 14 hindurchgeführt gehalten ist. Der Ankerkörper ist hier jedoch aus Metall, vorzugsweise aus Stahl gefertigt und reicht stirnseitig in eingesetztem Zustand nur bis zur Außenfläche des Mauerwerks 22.

An den Körper 1 schließt axial ein Isolierkörper 28 an, der aus thermisch isolierendem Material gefertigt ist, wie Glasfaser oder glasfaserverstärktem Kunststoff. Er besitzt eine ähnliche Umfangsgestaltung wie der Metall-Körper 1, nämlich gleichen Außenumfang und den Außenkanal 9, sowie eine Durchgangsöffnung 12 für die Gewindestange 14. Zudem ist der Isolierkörper in seiner Länge so ausgelegt, dass er zusammen mit der Metall-Scheibe 17 ca. der Dicke der Dämmschicht 23 entspricht. Die Scheibe 17 besitzt ebenfalls gleiche Radialabmessungen, dabei eine Durchgangs-Innenöffnung 12 und im Außenmantel den Kanal 9.

Zudem ist im Ankerkörper eine größere Durchgangsöffnung 29 vorgesehen, in der ein Isolierrohr 30 eingesetzt ist, das wiederum eine Durchgangsöffnung 12 für die Gewindestange 14 besitzt. Auch ist zwischen Mutter 15 und Stufung der Erweiterungsöffnung 13 eine Isolierscheibe 31 eingesetzt, so dass nunmehr eine thermische Isolierung aller Metallteile vorhanden ist.

Es ist hier auch zu erkennen, dass die Einführ-Sacklochöffnung 24 für den Anker im Mauerwerk 22 die gesamte Länge oder Breite des Mauersteins durchläuft, also beim Einbringen der Öffnung auf den Beton der Betondecke gestoßen wurde, somit der Mauerstein dadurch relativ geschwächt ist. Im Beton 32 ist eine koaxiale Bohrung 33 eingebracht, in die das hintere Ende der langen Gewindestange 14 hineinreicht und die mit Verbundkleber 34 verfüllt ist.

Aus Fig. 4 ist auch zu erkennen, wie bereits im Zusammenhang mit Fig. 3 ausgeführt, dass der Ankerkörper 1 mit der Außenfläche 26 des Mauerwerks abschließt, wobei die zweite Nutenzone 6 mit ihrer vordersten Nut 3 nahe der Stirnseite 8 des Ankerkörpers vorgesehen ist. Dies ist auch im Falle des Kunststoff-Ankers gemäß Fig. 1 - 3 der Fall, wobei dort dann noch die Dicke der Scheibe 17 zu berücksichtigen ist.

**Fig. 5** zeigt den Anker in dritter Ausführung 103, bei dem über den Außenmantel 2 des Ankerkörpers 1 ein hülsenförmiges elastisches Gewebenetz 37 aufgezogen ist. Dabei wird die hülsenförmige Umschließung dadurch erreicht, dass das ursprünglich schlauchförmige Gewebenetz an seinem einen Ende mit einem fest zusammenziehenden Verschluß 38 versehen ist. Dieser Verschluß kann durch Verkleben, Heißverkleben, Klammern, Zubinden o.ä. erhalten werden. Zudem ist das andre, beim Einschieben offene Ende 39 der Gewebenetz-Schlauch-Hülse axial entsprechend weit über die letzte äußere Nut 3 gezogen und am Ankerkörper ringförmig befestigt, z. B. angeklebt (Kleber und/oder Klebeband) oder über Ringnut oder Ringkerbe und elastischen Ring festgeklemmt.

In **Fig. 6** ist eine ähnliche Situation wie in Fig. 3 dargestellt, also der in einen Hohlkammerstein eingesetzte Ankerkörper 103 mit unter Druck eingebrachtem Verbundmörtel 34. Hier drückt der Verbundmörtel das Gewebenetz 37 radial in die Öffnungen 27 der Mauersteine 22, so dass Wülste 40 ausgebildet sind, die formschlüssig in die Öffnungen 27 eingreifen, fest umspannt durch das Netzmaterial.

**Fig. 7** zeigt einen Ankerkörper 104 in weiterer Ausführung und zwar als Strangpress- oder Stranggußteil, in welches die Ring-Nutenzonen 5, 6 eingebracht sind. Der Ankerkörper besitzt ebenfalls eine zentrische Durchgangsbohrung 12, jedoch innere, also nach außen zur Körper-Mantelfläche geschlossene Kanäle 10, 10' sowie Hohlräume 35. Im Falle seiner Ausführung aus Verbund-Kunststoff können die Hohlräume entfallen.

In **Fig. 8 und Fig. 9** ist ebenfalls ein in Strangpreß- oder Stranggußverfahren herstellbarer Ankerkörper 105 dargestellt, in kurzer Grundkörper-Ausführung mit mehreren axial gleichmäßig zueinander beabstandeten Nuten 3, einer zentrischen (Kernloch-) Durchgangsbohrung 12, mit einem Gewinde 42 in dessen vorderen Teil. Die jeweils äußeren Nuten 3 sind dabei so eingebracht bzw. von den Stirnflächen beabstandet, daß jeweils eine einsatzseitige hintere Ringschulter 43 und eine vordere Ringschulter 44 vorhanden ist, die jeweils mit einer feinen Riffelung oder Axial-Rillung 45 versehen sind. Es ist ein innerer Verfüll-Kanal 10 vorgesehen, der den Ankerkörper in seiner ganzen Länge durchzieht und an seinem inneren Einsteck-Ende mit einem Stopfen 46 verschlossen ist. Wie aus der Stirn-Ansicht aus Fig. 9 erkennbar ist, hat der Verfüll-Kanal 10 eine ovale Form, in Umfangsrichtung gestreckt, so daß er ausreichend Platz hat zwischen der zentrischen Bohrung 12, 42 und dem Außenmantel und gleichzeitig eine breitere offene Zone zur Ringnut 3 bringt.

In Fig. 10 ist der Ankerkörper 105 aus Fig. 8 dargestellt, auf dem ein Gewebenetz 37 aufgezogen ist, wobei dessen Enden auf den Schultern 43 und 44, die an ihrem Umfang mit Rillungen 45 versehen sind, mit Vorspannung aufliegen und mit Kleber, der auch in die Rillen eindringt, verklebt sind. Zudem ist über diese verklebten Zonen jeweils ein Klebeband ringförmig aufgeklebt, Ring-Befestigungszonen bildend. An der inneren Einsteckseite ist der Klebestreifen 47 als kurzer Flansch 48 radial einwärts gezogen, wodurch insgesamt ein guter Schutz der Gewebehülle 37 erreicht wird.

**Fig. 11** zeigt den bestrumpften kurzen Ankerkörper aus Fig. 10, eingesetzt in eine Sacklochöffnung 24 eines Hohlkammersteines 22, in verfülltem Zustand. Dabei fluchtet die vordere Stirnfläche 8 des Ankerkörpers mit der Frontfläche der Putzschicht 50, die ungefähr gleichbreit wie die Netz-Befestigungszone der Schulter 45 ist, so daß der erste Steg 51 des Hohlkammersteines 22 in der Zone der ersten Ringnut 3 steht und dort den Zwischenraum füllt und zudem in die Hohlräume 27 in Form von zumindest geringfügig einstehende Wülsten 40 eindringt oder das Gewebenetz radial entsprechend ausdehnt.

In **Fig. 12 bis 14** ist ein unbestrumpfter Ankerkörper 106 dargestellt, der große Ähnlichkeit mit dem Ankerkörper 105 aus Fig. 8 besitzt. Der wesentliche Unterschied ist darin zu sehen, daß die zentrische Gewindebohrung 42 ein Sackloch ist und daß zwei innere ovale Verfüll-Kanäle 10, 10' vorhanden sind, in diagonaler Gegenüberlage.

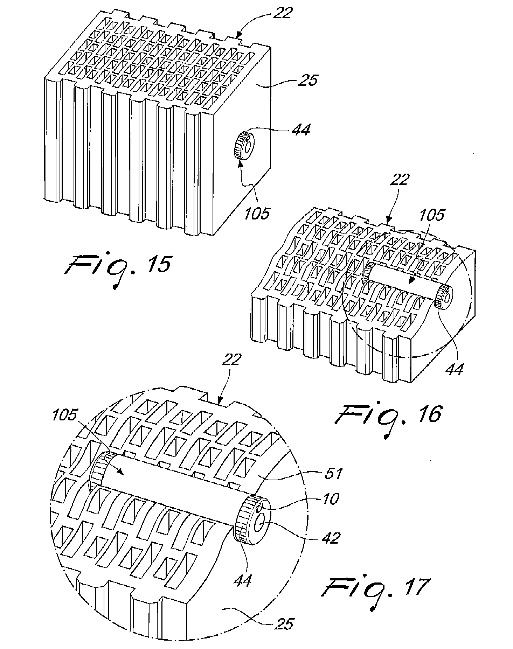

**Fig. 15 bis Fig. 17** veranschaulichen, wie ein kurzer, bestrumpfter Ankerkörper z. B. gemäß Fig. 10, in einen Hohlkammerstein 22 so eingesetzt ist, daß die Befestigungszone der vorderen Schulter 44 aus der unverputzten Frontfläche 25 hervorragt und zwar in zu erwartender Putzschichtdicke.

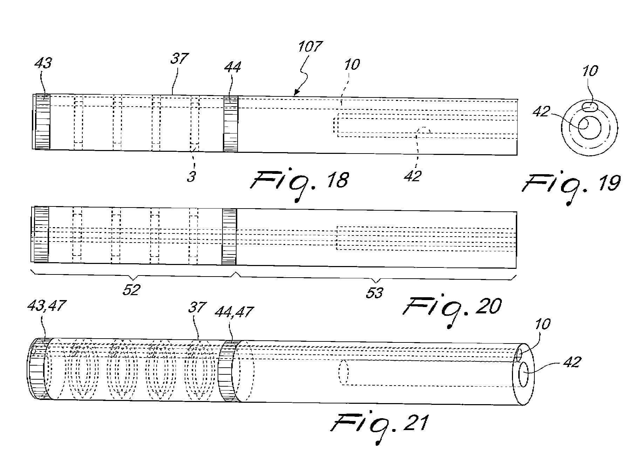

Fig. 18 bis 21 zeigen einen langen Ankerkörper 107, der an seinem einen Abschnitt eine Ausbildung wie der Ankerkörper 105 aus Fig. 8 und Fig. 10 besitzt, einen Grundkörper-Abschnitt 52 bildend, der in einem außen glattflächigen Verlängerungskörper-Abschnitt 53 einstückig weitergeführt ist. Dabei ist ein ovaler Innen-Verfüll-Kanal 10 vorhanden, sowie ein zentrisches Gewinde-Sackloch 42.

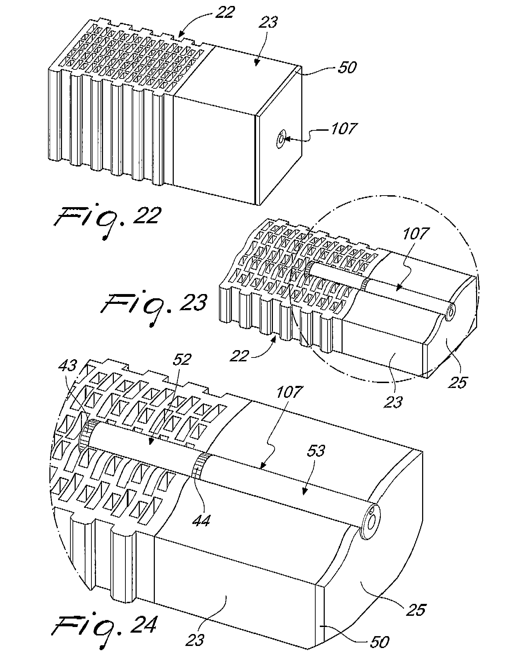

In Fig. 22 bis Fig. 24 ist dargestellt, wie der lange Ankerkörper aus Fig. 18 - 21 in einem Hohlkammerstein 22 mit isolierender Dämmschicht 23 und äußerer Putzschicht 50 eingesetzt ist und zwar so, daß die vordere Stirnfläche 8 bündig mit der äußeren Frontfläche 25 abschließt. Dabei ist die Position des Grundkörperabschnittes 52in gleicher Weise im Hohlkammerstein 22 eingebracht oder in und zu diesem ausgerichtet, wie der kurze Ankerkörper 25 in Fig. 15 - 17.

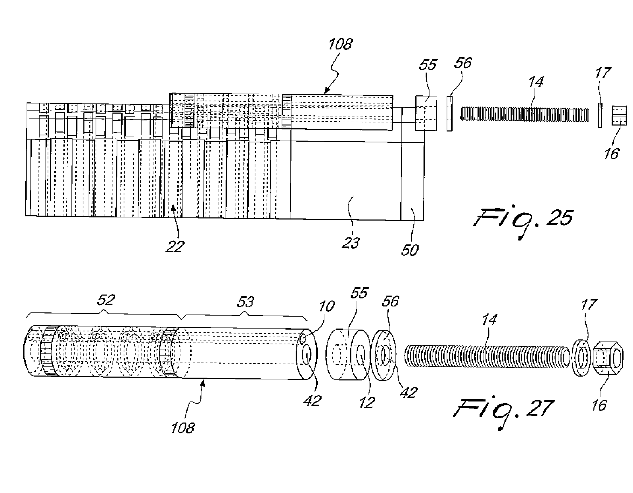

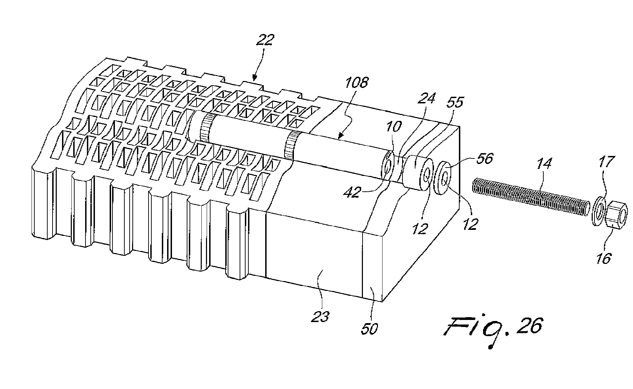

Schließlich zeigen **Fig. 25 bis 27** einen Anker, bestehend aus einem Ankerkörper 108, der ebenfalls einen Grundkörper-Abschnitt 52 und einen Verlängerungskörper-Abschnitt 53 besitzt, die mit einer zentrischen Gewindebohrung und einem Annenkanal 10 versehen ist. Da hier der Verlängerungsabschnitt etwas kürzer ist, sind zusätzlich eine dickere Beilegscheibe 55 und eine dünnere Beilegscheibe 56 vorhanden, die in die Sacklochbohrung 24 eingeschoben werden, so daß insgesamt ein bündiger Abschluß zur Frontfläche 25 vorhanden ist. Dabei sind die beiden Beilegscheiben 55, 56 aus dem gleichen Material gefertigt und besitzen den gleichen Außendurchmesser wie der Ankerkörper, sie haben jedoch nur jeweils eine zentrische Durchgangsbohrung 12 und keinen Verfüllkanal, da sie erst nach fertig erfolgtem Verfüllen in die Öffnung eingesteckt werden. Hier ist auch zusätzlich zu erkennen, daß zum Anker außer dem Ankerkörper 108 und den Beilegscheiben 55, 56 auch eine Anker-Gewindestange 14 gehört sowie eine Scheibe 17 und eine Befestigungsmutter 16.

**Bezugszeichenliste**

| | | | |
|---|---|---|---|
| 1. | Ankerkörper | 29. | Durchgangsöffnung |
| 2. | Außenmantel | 30. | Isolierrohr |
| 3. | (Umfangs-) Nuten | 31. | Isolierscheibe |
| 4. | Nutenwand | 32. | Beton (-decke) |
| 5. | erste Zone | 33. | Öffnung |
| 6. | zweite Zone | 34. | Verbundkleber, -mörtel |
| 7. | (hinteres) Einsteckende | 35. | Hohlraum |
| 8. | vordere Stirnfläche (Ende) | 36. | --- |
| 9. | Verfüll-Kanal, äußerer | 37. | Gewebenetz, -hülle |
| 10. | Verfüll-Kanal, innerer | 38. | Verschluß |
| 11. | --- | 39. | vorderes Ende |
| 12. | Durchgangsöffnung | 40. | Wulst |
| 13. | Erweiterungsöffnung | 41. | --- |
| 14. | Gewindestange | 42. | Gewinde, Sackloch |
| 15. | Führungs-Mutter | 43. | Schulter, hinten |
| 16. | Befestigungs-Mutter | 44. | Schulter, vorne |
| 17. | Scheibe | 45. | Riffelung, Rillung |
| 18. | Vertiefung für Werkzeug | 46. | Stopfen |
| 19. | Gewindebohrung | 47. | Klebestreifen |
| 20. | Schlauch | 48. | Flansch |
| 21. | Schlauch | 49. | --- |
| 22. | Mauerwerk, Hohlkammerstein | 50. | Putzschicht |
| 23. | Dämmschicht | 51. | Erster Steg |
| 24. | Sackloch-Öffnung | 52. | Grundkörper-Abschnitt |
| 25. | Frontfläche | 53. | Verlängerung-Abschnitt |
| 26. | Außenfläche Mauerwerk | 54. | --- |
| 27. | Mauerstein-Hohlraum | 55. | Beilegscheibe, dick |
| 28. | Isolierkörper | 56. | Beilegscheibe, dünn |
| 101. | Anker, 1. Ausführung | | |
| 102. | Anker, 2. Ausführung | | |
| 103. | Anker, 3. Ausführung | | |
| 104. | Strangguß-Ausführung | | |
| 105. | 1. Kurze Ausführung | | |
| 106. | 2. Kurze Ausführung | | |
| 107. | 1. lange Ausführung | | |
| 108. | 2. lange Ausführung | | |

## Patentansprüche

1. Anker für Wände zum Befestigen von abragenden Bauwerken wie Markisen, bestehend aus
- einem in eine Öffnung oder Bohrung in einem Mauerwerk einsetzbaren zylindrischen Ankerkörper (1),
- und einem in einer zentrischen Öffnung (12, 19) im Ankerkörper eingeschraubten Anker-Gewindestange (14), der aus diesem vorne um eine entsprechende Befestigungslänge hervorragt,
- wobei am Außenmantel des Ankerkörpers ein Außenprofil vorhanden ist, mit Zwischenräumen zur Aufnahme zumindest zwischen Anker-Mantelfläche und Bohrungsmantel eines Klebematerials wie Verbundkleber oder Verbundmörtel, zum Festsetzen des Ankers im Mauerwerk,
**dadurch gekennzeichnet,**
- **dass** zum Einbringen unter Druck des Verbundmörtels nach Einsetzen des Ankers (101, 102) in das Mauerwerk (22), im Ankerkörper mindestens ein axialer Verfüll-Kanal (9, 10) am oder nahe zu dessen Außenmantel vorgesehen ist, wobei der mindestens eine Kanal (9, 10) in im Mauerwerk eingesetztem Zustand von der vorderen, im Einsatz äußeren Stirnseite (8) des Ankers bis zur letzten Profilerhebung des Außenprofils (3) geführt ist und mit der zentrischen Öffnung (12, 19) nicht in Verbindung steht,
- **dass** der Ankerkörper (1) auf seinem Außenumfang (2), zumindest in Länge seiner Eindringtiefe im Mauerwerk, mit einem schlauchförmigen, dehnfähigen, engmaschigen Gewebehülle (37) versehen ist,
- und **dass** als Außenprofil am Ankerkörper mehrere axial zueinander beabstandete ringförmige Nuten (3) vorgesehen sind, die mit den Verfüll-Kanälen in Verbindung stehen oder sich in diese radial öffnen.

2. Anker nach Anspruch 1, **dadurch gekennzeichnet,**
- **dass** die Gewebehülle (37) ein Netz-Schlauch aus einem ausweitbaren, feinen und reißfesten, dabei für das Klebermaterial nur sehr geringfügig durchlässigen Kunststofffaser-Strickmaterial, vorzugsweise einem dehnfähigen Polyamidgewebe gefertigt ist,
- **dass** die Gewebehülle mit insbesondere radialer Vorspannung auf dem Ankerkörper aufgezogen ist und in diesem Zustand an beiden Enden ringförmig am Ankerkörper befestigt ist, mittels Kleber und über diesem ringförmig aufgebrachten Klebeband, eine ringförmige Befestigungszone bildend, von ca. 10 - 20 mm, vorzugsweise 15 mm Breite, wobei an der inneren Einsteck-Stirnseite des Ankerkörpers der Klebestreifen stirnseitig nach innen gezogen ist oder eine Kappe aufgesteckt ist,
- und **daß** in den Ring-Befestigungszonen am Ankerkörper eine Rillenzone mit feinen Umfangs-Längsrillen vorhanden ist, wobei die beiden Rillen-Befestigungszonen jeweils direkt benachbart oder anschließend zur jeweils axial äußersten Nut (3) vorgesehen sind.

3. Anker nach Anspruch 1, **dadurch gekennzeichnet,**
- **dass** der mindestens eine Verfüll-Kanal (9) eine zur Außenfläche offene Nut und somit ein Außenkanal ist, vorzugsweise mit rechteckigem Querschnitt,
oder eine axiale Bohrung oder Öffnung (10) ist, die zwischen der zentrischen Öffnung (12, 19) und Außenmantel des Ankerkörpers verläuft, dabei radial nach außen in die Ringnuten reicht, ohne jedoch radial nach innen mit der zentrischen Öffnung in Verbindung zu stehen, einen Innenkanal darstellend,
- und **daß** bei Vorhandensein von zwei Verfüllkanälen, diese zueinander diagonal gegenüberliegend am Außenmantel angeordnet sind.

4. Anker nach Anspruch 3, **dadurch gekennzeichnet,**
**daß** der Innen-Verfüll-Kanal (10) einen Durchschnittsdurchmesser von 5 - 12 mm, vorzugsweise von 8 mm besitzt und eine in Umfangsrichtung sich erstreckende ovale Form hat.

5. Anker nach Anspruch 1, **dadurch gekennzeichnet,**
- **dass** die ringförmigen Nuten (3) des Außenprofils in Form von mindestens einer Zone (5, 6) mit mehren ringförmigen Nuten (3) vorgesehen ist,
- **dass** bei Vorhandensein von nur einer Nutenzone, diese vorzugsweise am oder nahe dem hinteren Einführende (7) angeordnet ist,
- nd dass bei Vorhandensein von zwei Nutenzonen (5, 6), diese so angeordnet sind, dass sie in eingesetztem Zustand des Ankers jeweils nahe einem der beiden Enden der Einführöffnung (24) im Mauerwerk (22) benachbart sind,
- wobei eine erste hintere Nutenzone (5) am oder nahe dem hinteren Einführende (7) angeordnet ist, während die zweite Nutenzone (6) am oder nahe dem vorderen Ende (8) des Ankerkörpers (1) vorhanden ist,
- und wobei bei Vorhandensein einer vorderen Dämmschicht (23) am Mauerwerk (22) die zweite, vordere Nutenzone (6) am Ankerkörper weiter innen so angeordnet ist, dass sie in eingesetztem Zustand des Ankers nahe der Stirnseite (26) des Mauerwerks angeordnet ist, ohne sich zu dieser hin zu öffnen.

6. Anker nach Anspruch 1, **dadurch gekennzeichnet,**
**dass** die zentrische Öffnung im Ankerkörper (1) eine Durchgangsbohrung (12) ist, durch welche eine vorzugsweise aus Stahl gefertigte Gewindestange (14) hindurchgeführt ist, deren Länge um die vordere Befestigungslänge größer ist als die Länge des Ankerkörpers und die am oder nahe dem hinteren Einführende (7) des Ankerkörpers in einer Gewindebohrung (19) geführt gehalten ist,
wobei die Gewindebohrung (19) in der Durchgangsöffnung (12) vorgesehen ist oder Teil einer Befestigungsmutter (15) ist, die in der Durchgangsbohrung oder einer endseitigen Erweiterungsöffnung (13) der Durchgangsbohrung (12) fest angeordnet ist, z.B. durch Einkleben oder Einpressen.

7. Anker nach Anspruch 6, **dadurch gekennzeichnet,**
**dass** die Gewindespindel (14) bedarfsweise so lang ausgebildet ist, dass sie rückseitig aus dem Ankerkörper (1) hervorragt, wobei die hervorragende Länge entsprechend der benötigten Eingriffslänge in dem an das Mauerwerk (22) angrenzenden Betonteil (32) auslegbar ist.

8. Anker nach Anspruch 6, **dadurch gekennzeichnet,**
**dass** die zentrische Bohrung im Ankerkörper (1) eine Gewindebohrung (19) ist, die als Sacklochbohrung eingebracht ist oder als ein in einer Durchgangsbohrung (12) in entsprechender Tiefe eingeschnittenes Gewinde.

9. Anker nach Anspruch 1, **dadurch gekennzeichnet,**
**dass** der Ankerkörper (1, 101) aus Kunststoff oder faserverstärktem Material gefertigt ist, wobei das Basismaterial Kunststoff oder Beton sein kann, während als Fasernmaterial Fasern aus Glas, Kohle, Kunststoff oder Stahl verwendbar sind, daß vorzugsweise der Ankerkörper aus glasfaserverstärktem Kunststoff gefertigt ist.

10. Anker nach Anspruch 1, **dadurch gekennzeichnet,**
**dass** der Ankerkörper (1, 102) aus Metall gefertigt ist, vorzugsweise aus Stahl, wobei der Metall-Ankerkörper und die Gewindestange (14) in ihrem gesamten Verlauf thermisch isoliert sind, wobei bei Vorhandensein an der vorderen Stirnseite (8) des Ankerkörpers eine Mauer-Dämmschicht (23) ein vorderer koaxialer Isolierkörper (28) und zwischen dem Körper und der Gewindespindel weitere Dämmungen vorgesehen sind, z. B. aus thermisch isolierendem Kunststoff,
oder daß der Ankerkörper aus Aluminium gefertigt ist, für Mauern ohne isolierende Dämmschicht.

11. Anker nach Anspruch 10, **dadurch gekennzeichnet,**
**dass** der vordere Isolierkörper (28) vorzugsweise aus Glasfasern oder einem Verbundmaterial mit Glasfasern besteht, wobei er ca. den gleichen Außendurchmesser besitzt wie der Ankerkörper und dass radial zwischen Gewindespindel und Innenbohrung des Ankerkörpers ein konzentrisches Isolierrohr (30) und axial zwischen Befestigungsmutter (15) und Stufung der Erweiterung (13) der Bohrung (12) und eine Isolierscheibe (31) vorhanden ist.

12. Anker nach Anspruch 1, **dadurch gekennzeichnet,**
**dass** der Ankerkörper im Stragguß- oder Strangpreßverfahren gefertigt ist, aus glasfaserverstärktem Kunststoff (GFK) oder aus Aluminium, wobei der mindestens eine Innen-Verfüll-Kanal (19) und die zentrische Öffnung vorhanden sind, und wobei die Innenkanäle mit Stopfen an der Einsteckseite verschlossen sind und die zentrische Öffnung zumindest an der nach außen weisenden Seite in vorbestimmter Länge mit einem Gewinde für die Anker-Gewindestange versehen ist.

13. Anker nach Anspruch 1, **dadurch gekennzeichnet,**
**dass** für nicht isolierte und nur verputzte oder zu verputzende Wände der Ankerkörper so ausgelegt und die Maueröffnung so eingebracht ist, daß er in eingestecktem Zustand ca. 15 mm übersteht, also um ca. die Länge der Netz-Befestigungszone (44) und gleichzeitig der Putzstärke, wodurch die erste Verteiler-Ringnut (3) in Höhe des ersten und in der Regel stärksten Steges (51) des Hohlsteines (22) sich befindet und damit diese Zone mit Mörtel beaufschlagt wird und die Belastungsaufnahme erfolgt, gleichzeitig einen Anker-Grundkörper (52) bildend, somit kurze Version.

14. Anker nach Anspruch 1 und 13, **dadurch gekennzeichnet,**
**dass** für isolierte, mit einer Dämmschicht (23) versehene Wände der Ankerkörper ebenfalls den Ankergrundkörper-Abschnitt (52) mit Nuten und darüber gezogener Gewebehülle besitzt und über diesen hinaus als Verlängerungs-Abschnitt (53) mit glatter Mantelfläche erstreckt, wobei der Ankerkörper in eingesetztem Zustand insgesamt maximal bis zur Außenfläche 25 der Dämmschicht reicht,
und **daß** bei Vorhandensein einer dickeren Dämmschicht oder einem zu kurzen Verlängerungsteil, Anker-Beilegscheiben (55, 56) aus gleichem Material, mit gleichem Außendurchmesser jedoch gewindefreier Innenbohrung und ohne Verfüll-Kanäle in die Öffnung der Dämmschicht über die Gewindestange (14) einsetzbar sind, die fehlende Ankerlänge ausgleichend.
